# EUROPÄISCHE PATENTANMELDUNG

(11) **EP 1 089 044 A1**
(43) Veröffentlichungstag der Anmeldung: **04.04.2001**
(21) Anmeldenummer: 00890232.2
(22) Anmeldetag: 28.07.2000
(51) Int. Cl.: F27B 7/24, F23G 5/027

(54) **Drehofen, insbesondere zur Destillation von organischen Abfallstoffen, beispielsweise Altreifen**

(30) Priorität: 28.09.1999 AT 166099
(71) Anmelder: Ragailler, Franz, A-4070 Eferding (AT)
(72) Erfinder: Ragailler, Franz, A-4070 Eferding (AT)
(74) Vertreter: Hübscher, Heiner, Dipl.-Ing.

(57) **Zusammenfassung**

Es wird ein Drehrohrofen, insbesondere zur Destillation von organischen Abfallstoffen, beispielsweise Altreifen, mit einem in einem Ofengestell zwischen zwei stirnseitigen Ofenwänden (2) gelagerten Drehrohr (1), das im Bereich der Ofenwände (2) je einen Außenring (3) mit zwei konzentrischen Aufnahmenuten (4) für je einen Dichtungsring (5) an der der anschließenden Ofenwand (2) zugekehrten Stirnseite trägt, mit zwei mit den Ofenwänden (2) gasdicht verbundenen, axial verschiebbar geführten und federnd an die Dichtungsringe (5) andrückbaren Gleitringen (6), die Anschlüsse (16) zur Beaufschlagung des Ringspaltes (13) zwischen den beiden anliegenden Dichtungsringen (5) mit einem Sperrmedium aufweisen, und mit über Spindeltriebe (23) beaufschlagbaren Stellringen (22) zum axialen Nachstellen der Dichtungsringe (5) beschrieben. Um vorteilhafte Dichtungsbedingungen zu schaffen, wird vorgeschlagen, daß die Gleitringe (6) um eine horizontale Achse verschwenkbar gelagert sind, daß der Ringspalt (13) zwischen den beiden Dichtungsringen (5) über den jeweils anliegenden Gleitring (6) an einen Flüssigkeitskreislauf (17) angeschlossen ist, der einen Flüssigkeitskühler (19) umfaßt, und daß die Außenringe (3) zwischen den Aufnahmenuten (4) für die Dichtungsringe (5) Kühlkanäle bilden, die mit dem Ringspalt (13) in Strömungsverbindung stehen.

## Beschreibung

Die Erfindung bezieht sich auf einen Drehrohrofen, insbesondere zur Destillation von organischen Abfallstoffen, beispielsweise Altreifen, mit einem in einem Ofengestell zwischen zwei stirnseitigen Ofenwänden gelagerten Drehrohr, das im Bereich der Ofenwände je einen Außenring mit zwei konzentrischen Aufnahmenuten für je einen Dichtungsring an der der anschließenden Ofenwand zugekehrten Stirnseite trägt, mit zwei mit den Ofenwänden gasdicht verbundenen, axial verschiebbar geführten und federnd an die Dichtungsringe andrückbaren Gleitringen, die Anschlüsse zur Beaufschlagung des Ringspaltes zwischen den beiden anliegenden Dichtungsringen mit einem Sperrmedium aufweisen, und mit über Spindeltriebe beaufschlagbaren Stellringen zum axialen Nachstellen der Dichtungsringe.

Ist beim Betrieb eines Drehrohrofens mit dem Auftreten von umweltschädigenden Gasen zu rechnen, wie dies beispielsweise bei der Destillation von organischen Abfallstoffen, wie Altreifen, Kunststoffen od. dgl., der Fall ist, kommt der Abdichtung des Drehrohres gegenüber den stirnseitig anschließenden Ofenwänden eine besondere Bedeutung zu. Diese Ofenabdichtungen machen vor allem deshalb Schwierigkeiten, weil das Drehrohr hohen Temperaturbelastungen ausgesetzt ist, so daß nicht nur die Wärmebelastungen der Dichtungen, sondern auch die Wärmedehnungen im Dichtungsbereich berücksichtigt werden müssen. Zu diesem Zweck ist es bekannt (AT 397 861 B), im Endbereich des Drehrohres einen Außenring vorzusehen, der auf der der Ofenwand zugekehrten Stirnseite zwei konzentrische Dichtungsringe trägt, die mit einem der Ofenwand zugehörigen Gleitring zusammenwirken. Dieser in axialer Richtung verschiebbar gelagerte, mit der Ofenwand über einen Dichtungsbalg gasdicht verbundene Gleitring stützt sich auf axial wirksamen Druckfedern ab, die den Gleitring an die Dichtungsringe andrücken. Die federnde Anlage des Gleitringes an den Dichtungsringen erlaubt eine Anpassung an axiale Wärmedehnungen des Drehrohres, das sich allerdings aufgrund seiner Belastungen auch durchbiegt, und zwar unter einer gegensinnigen Schrägstellung seiner stirnseitigen Enden. Da die Außenringe mit den Dichtungsringen diese Schrägstellung mitmachen, nicht aber die mit den Dichtungsringen zusammenwirkenden, den Ofenwänden zugeordneten Gleitringe, muß mit undichten Stellen entlang des Dichtungsumfanges gerechnet werden. Damit diese Leckstellen nicht zu einem Austritt umweltschädigender Gase führen, wird der Ringspalt zwischen den beiden Dichtungsringen jedes Außenringes mit einem Sperrgas beaufschlagt, das über den anliegenden Gleitring unter einem entsprechenden Überdruck zugeführt wird. Diese Sperrgasbeaufschlagung bedingt einen zusätzlichen Aufwand, wobei mit erheblichen Leckverlusten an Sperrgas gerechnet werden muß.

Über die vom Drehrohr her erwärmten Außenringe werden die in Aufnahmenuten eingesetzten Dichtungsringe ebenfalls einer erheblichen Wärmebelastung unterworfen, was einen erhöhten Reibungsverschleiß nach sich zieht. Die Dichtungsringe müssen daher verschleißbedingt nachgestellt werden. Diese Nachstellung erfolgt über in den Aufnahmenuten geführte Stellringe, die mit Hilfe von über den Umfang verteilten Spindeltrieben axial verstellt werden. Da die Stellringe eine geringere Wärmebelastung als die Außenringe erfahren, ergeben sich hinsichtlich der axialen Verstellung der Stellringe Schwierigkeiten, zumal die in Muttergewinden der Außenringe gehaltenen Spindeln der Spindeltriebe ebenfalls ein gegenüber den Außenringen unterschiedliches Wärmedehnungsverhalten zeigen. Unter schwierigen Bedingungen können diese Umstände zu einem ungleichmäßigen Nachstellen der Dichtungsringe mit einem Verlust an Dichtheit und einer Erhöhung des Verschleißes führen.

Der Erfindung liegt somit die Aufgabe zugrunde, einen Drehrohrofen, insbesondere zur Destillation von organischen Abfallstoffen, beispielsweise Altreifen, der eingangs geschilderten Art so auszugestalten, daß eine vorteilhafte, allen Anforderungen genügende Abdichtung des Drehrohres gegenüber den anschließenden stirnseitigen Ofenwänden sichergestellt werden kann.

Die Erfindung löst die gestellte Aufgabe dadurch, daß der Ringspalt zwischen den beiden Dichtungsringen über den jeweils anliegenden Gleitring an einen Flüssigkeitskreislauf angeschlossen ist, der einen Flüssigkeitskühler umfaßt, und daß die Außenringe zwischen den Aufnahmenuten für die Dichtungsringe Kühlkanäle bilden, die mit dem Ringspalt in Strömungsverbindung stehen.

Die zusätzliche Schwenklagerung der Gleitringe um eine horizontale Achse erlaubt in einfacher Weise die Berücksichtigung der stirnseitigen Drehrohrneigung zufolge einer gewichtsbedingten Rohrdurchbiegung, so daß die den Ofenwänden zugeordneten Gleitringe den diesbezüglichen Bewegungen der Außenringe folgen können. Da außerdem der Ringspalt zwischen den beiden Dichtungsringen nicht mit einem Sperrgas, sondern mit Flüssigkeit beaufschlagt wird, die in einem Kreislauf über einen Flüssigkeitskühler geführt wird, kann über diese Flüssigkeit der Dichtungsbereich wirksam gekühlt werden, zumal die Außenringe zwischen den Aufnahmenuten für die Dichtungsringe Kühlkanäle bilden. Dies bedeutet, daß über die Flüssigkeit als Sperrmedium die angestrebte Gasdichtheit der Drehrohrabdichtung erreicht wird, daß aber auch über die Flüssigkeit als Kühlmittel die Temperaturbelastung der Konstruktionsteile im Dichtungsbereich vorteilhaft herabgesetzt werden kann, was die sonst auftretenden Schwierigkeiten hinsichtlich der Nachstellung der Dichtungsringe über die Stellringe vermeidet. Dazu kommt, daß die Flüssigkeit als Schmiermittel zwischen den Dichtungsringen und den Gleitringen wirksam wird, so daß im Zusammenwirken mit der niedrigeren Temperaturbelastung das Verschleißverhalten der Dichtungsringe erheblich verbessert werden kann. Mit Hilfe der vorgeschlagenen Maßnahmen können daher die anstehenden Schwierigkeiten hinsichtlich eines gasdichten Anschlusses des Drehrohres an die stirnseitigen Ofenwände vorteilhaft gelöst werden.

Um in einfacher Weise die für die axialen Wärmedehnungen des Drehrohres erforderliche axiale Verstellung der Gleitringe mit der die Rohrbiegung berücksichtigenden Schwenklagerung verbinden zu können, können die Gleitringe mit Hilfe von diametral abstehenden Achsstummeln in axialen Langlöchern von an den Ofenwänden vorgesehenen Gleitringträgern gelagert sein. In diesen axialen Langlöchern sind die Gleitringe über die diametral abstehenden Achsstummeln sowohl verschwenkbar als auch verschiebbar gehalten, wobei die Anpassung an die jeweilige Lage der die Dichtungsringe aufnehmenden Außenringe über die Federbelastung der Gleitringe automatisch erfolgt.

Um eine einfache, dem jeweiligen Verschleiß entsprechende Nachstellung der Dichtungsringe zu erreichen, kann mit den Antriebszahnrädern der Spindeltriebe zur Beaufschlagung der Stellringe für die Dichtungsringe ein Innenzahnkranz kämmen, der frei drehbar gelagert ist und einen mit einem einschwenkbaren Sperranschlag zusammenwirkenden Drehanschlag aufweist. Dieser Zahnkranz, der vorzugsweise auf den Antriebszahnrädern selbst gelagert wird, wird mit dem Außenring über die Antriebszahnräder der Spindeltriebe mitgedreht, solange die freie Drehbarkeit des Innenkranzes nicht durch den einschwenkbaren Sperranschlag behindert wird. Dieser Sperranschlag hält im Bedarfsfall den Innenzahnkranz gegenüber der Außenringedrehung zurück, was zu einer Verdrehung der Antriebszahnräder der Spindeltriebe und damit der Dichtungsringe führt. Mit Hilfe eines den axialen Abstand zwischen dem Gleitring und dem anliegenden Außenring überwachenden Abstandsfühlers kann die Nachstellung der Dichtungsringe in einfacher Weise automatisiert werden.

In der Zeichnung ist der Erfindungsgegenstand beispielsweise dargestellt. Es zeigen
- Fig. 1: einen erfindungsgemäßen Drehrohrofen in einem achsnormalen Schnitt,
- Fig. 2: einen Schnitt nach der Linie II-II der Fig. 1 in einem größeren Maßstab,
- Fig. 3: eine stirnseitige Ansicht auf einen Gleitring in Richtung der zugehörigen Ofenwand ohne Drehrohr und
- Fig. 4: einen Schnitt nach der Linie IV-IV der Fig. 3 in einem größeren Maßstab.

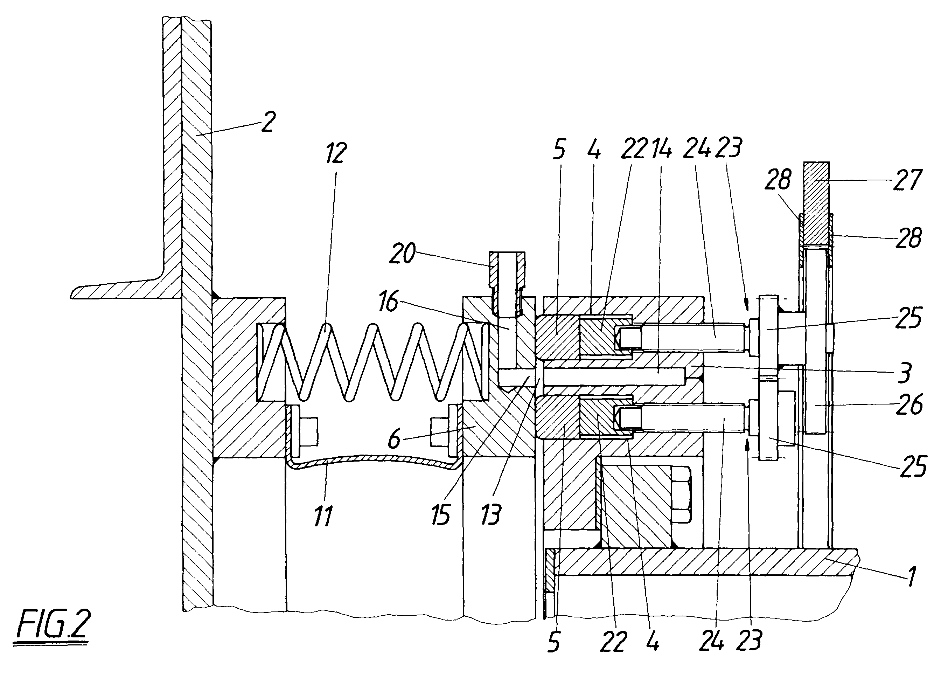

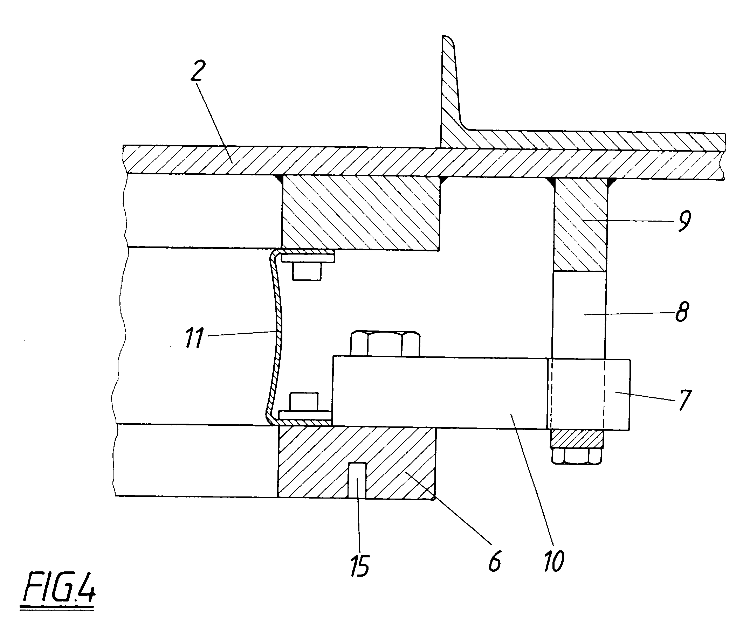

Der dargestellte Drehrohrofen weist ein Drehrohr 1 auf, das in herkömmlicher Weise über Laufringe auf Lagerrollen eines Ofengestells abgestützt, das im Bereich der beiden Enden des Drehrohres 1 Ofenwände 2 bildet, an die das Drehrohr 1 gasdicht angeschlossen werden muß. Zu diesem Zweck trägt das Drehrohr 1 im Bereich seiner Enden je einen Außenring 3, der auf seiner der Ofenwand 2 zugekehrten Stirnseite zwei konzentrische Aufnahmenuten 4 für zwei Dichtungsringe 5 aufweist, wie dies insbesondere der Fig. 2 entnommen werden kann. An diesen Dichtungsringen 5 liegt ein der Ofenwand 2 zugehöriger Gleitring 6 an, der mit Hilfe von diametral abstehenden Achsstummeln 7, die eine horizontale Schwenkachse bilden, in bezüglich des Drehrohres 2 axial ausgerichteten Langlöchern 8 von an der Ofenwand 2 vorgesehenen Gleitringträgern 9 gelagert ist (Fig. 4). Zur Befestigung der Achsstummel 7 an den Gleitringen 6 sind Anschlußplatten 10 vorgesehen, die an den Gleitringen 6 angeschraubt werden. Die gasdichte Verbindung zwischen der Ofenwand 2 und dem zugehörigen Gleitring 6 erfolgt über einen Dichtungsbalg 11. Der in den Langlöchern 8 der Gleitringträger 9 axial verschiebbar geführte Gleitring 6 wird mit Hilfe von Druckfedern 12 axial beaufschlagt, die über den Umfang des Gleitringes 6 verteilt angeordnet sind und sich an der Ofenwand 2 abstützen. Über diese federnde Beaufschlagung des Gleitringes 6 wird eine dichte Anlage des Gleitringes 6 an den Dichtungsringen 5 gewährleistet, und zwar unabhängig von axialen Wärmedehnungen des Drehrohres 1 oder Schrägstellungen, die durch eine Rohrdurchbiegung bedingt werden. Die Schwenk- und Verschiebelagerung der Gleitringe 6 erlaubt ja eine allseitige Anpassung an jede Lagenänderung der Außenringe 3.

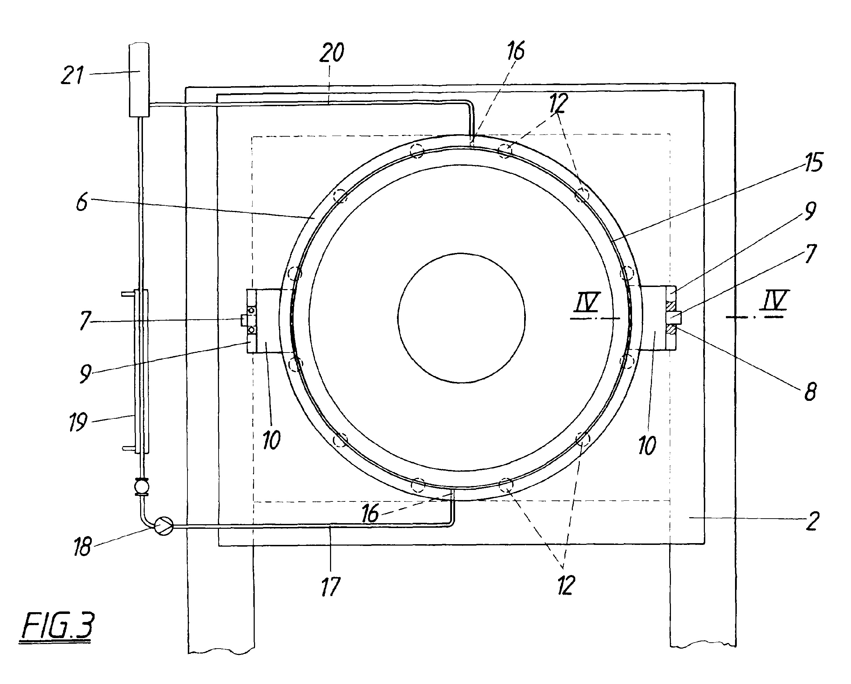

Der Ringspalt 13 zwischen den beiden Dichtungsringen 5 öffnet sich auf der Seite des Außenringes 3 zu einem zwischen den Aufnahmenuten 4 umlaufenden Kühlkanal 14, der wie der Ringspalt 13 über eine im Bereich des Ringspaltes 13 vorgesehene Ringnut 15 mit Flüssigkeit versorgt wird. Die Ringnut 15 ist über Anschlußbohrungen 16 an einen Flüssigkeitskreislauf 17 angeschlossen, der über eine Kreislaufpumpe 18 die in einem Kühler 19 gekühlte Flüssigkeit dem Gleitring 6 zuführt, wie dies der Fig. 3 entnommen werden kann. Über die Ringnut 15 gelangt die Flüssigkeit in den Ringspalt 13 zwischen den Dichtungsringen 5 und von dort in den Kühlkanal 14, so daß der Außenring 3 im Bereich der Ringdichtungen 5 eine entsprechende Kühlung erfährt. Die durch den Ringspalt 13 geführte Flüssigkeit dient aber nicht nur zur Kühlung, sondern auch zur Dichtung und Schmierung der Dichtringe 5. Die erwärmte Flüssigkeit wird über die an den Gleitring 6 angeschlossene Rückleitung 20 des Flüssigkeitskreislaufes 17 abgezogen und dem Flüssigkeitskühler 19 zugeführt. Allfällige Leckverluste werden über ein Ausgleichsgefäß 21 ersetzt.

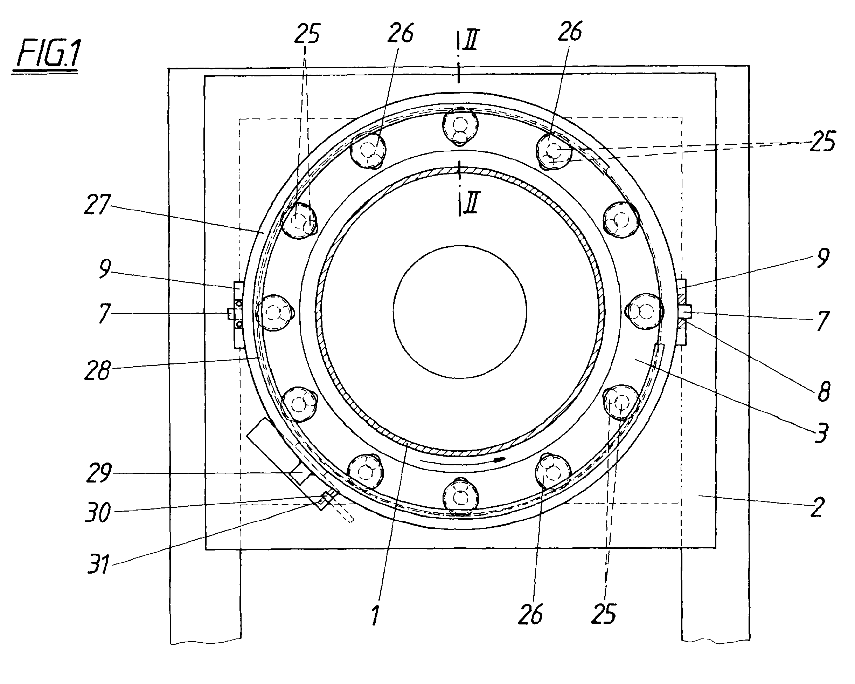

Die Kühlung des Außenringes 3 des Drehrohres 1 schafft nicht nur vorteilhafte Dichtungsverhältnisse, sondern stellt auch eine wesentliche Voraussetzung für eine störungsfreie Nachstellung der Dichtungsringe 5 dar. Diese Nachstellung erfolgt über in den Aufnahmenuten 4 vorgesehene Stellringe 22, die über Spindeltriebe 23 axial verlagert werden können. Die mit gegensinnigen Gewinden versehenen Spindeln 24 dieser Spindeltriebe 23, die paarweise über den Umfang des Außenringes 3 verteilt angeordnet sind, stehen über ein Zahnradpaar 25 in Antriebsverbindung und werden jeweils über ein Antriebszahnrad 26 betätigt. Alle Antriebszahnräder 26 kämmen mit einem Innenzahnkranz 27, der gemäß den Fig. 1 und 2 frei drehbar auf den Antriebszahnrädern 26 gelagert ist. Über seitliche Schürzen 28 wird ein axiales Abgleiten des Innenzahnkranzes 27 von den Antriebszahnrädern 26 verhindert. Der Innenzahnkranz 27 weist einen abstehenden Drehanschlag 29 auf, der gemäß der Fig. 1 mit einem in die Bahn des Drehanschlages 29 einschwenkbaren Sperranschlag 30 zusammenwirkt. Dieser um eine zum Innenzahnkranz 27 radiale Achse 31 verschwenkbare Sperranschlag 30 verhindert in der mit vollen Linien eingezeichneten eingeschwenkten Sperrstellung ein Mitdrehen des Innenzahnkranzes 27 mit dem Außenring 3, was eine Drehung der Antriebszahnräder 26 der Spindeltriebe 23 zur Folge hat. Die Dichtungsringe 5 werden demnach gegen den anliegenden Gleitring 6 hin nachgestellt, um den jeweiligen Verschleiß auszugleichen. Der axiale Abstand zwischen dem Außenring 3 und dem Gleitring 6 kann als Bezugsgröße für die axiale Nachstellung der Dichtungsringe 5 herangezogen werden, so daß über einen diesen Abstand erfassenden Fühler die Dichtungsringnachstellung automatisiert werden kann. Ist der Sollwert für den Abstand zwischen Außenring 3 und Gleitring 6 erreicht, so wird der Sperranschlag 30 aus der Bahn des Drehanschlages 29 in die strichpunktiert eingezeichnete Stellung ausgeschwenkt und der Innenzahnkranz 27 wieder mit dem Außenring 3 mitgedreht, wodurch der Antrieb der Spindeltriebe 23 unterbrochen wird.

## Patentansprüche

1. Drehrohrofen, insbesondere zur Destillation von organischen Abfallstoffen, beispielsweise Altreifen, mit einem in einem Ofengestell zwischen zwei stirnseitigen Ofenwänden (2) gelagerten Drehrohr (1), das im Bereich der Ofenwände (2) je einen Außenring (3) mit zwei konzentrischen Aufnahmenuten (4) für je einen Dichtungsring (5) an der der anschließenden Ofenwand (2) zugekehrten Stirnseite trägt, mit zwei mit den Ofenwänden (2) gasdicht verbundenen, axial verschiebbar geführten und federnd an die Dichtungsringe (5) andrückbaren Gleitringen (6), die Anschlüsse (16) zur Beaufschlagung des Ringspaltes (13) zwischen den beiden anliegenden Dichtungsringen (5) mit einem Sperrmedium aufweisen, und mit über Spindeltriebe (23) beaufschlagbaren Stellringen (22) zum axialen Nachstellen der Dichtungsringe (5), dadurch gekennzeichnet, daß die Gleitringe (6) um eine horizontale Achse verschwenkbar gelagert sind, daß der Ringspalt (13) zwischen den beiden Dichtungsringen (5) über den jeweils anliegenden Gleitring (6) an einen Flüssigkeitskreislauf (17) angeschlossen ist, der einen Flüssigkeitskühler (19) umfaßt, und daß die Außenringe (3) zwischen den Aufnahmenuten (4) für die Dichtungsringe (5) Kühlkanäle (14) bilden, die mit dem Ringspalt (13) in Strömungsverbindung stehen.

2. Drehrohrofen nach Anspruch 1, dadurch gekennzeichnet, daß die Gleitringe (6) mit Hilfe von diametral abstehenden Achsstummeln (7) in axialen Langlöchern (8) von an den Ofenwänden (2) vorgesehenen Gleitringträgern (9) gelagert sind.

3. Drehrohrofen nach Anspruch 1 oder 2, dadurch gekennzeichnet, daß mit den Antriebszahnrädern (26) der Spindeltriebe (23) zur Beaufschlagung der Stellringe (22) für die Dichtungsringe (5) ein Innenzahnkranz (27) kämmt, der vorzugsweise auf den Antriebszahnrädern (26) frei drehbar gelagert ist und einen mit einem einschwenkbaren Sperranschlag (30) zusammenwirkenden Drehanschlag (29) aufweist.
